# FASCICULE DE BREVET EUROPEEN

(11) **EP 1 460 894 B1**
(45) Date de publication et mention de la délivrance du brevet: **22.03.2006**
(21) Numéro de dépôt: 02804250.5
(22) Date de dépôt: 04.12.2002
(51) Int. Cl.: A01K 59/00, A01K 59/02, A01K 59/06, A01K 59/04

(54) **MACHINE DE RECUPERATION DU MIEL DE CADRES DE RUCHE**
MASCHINE ZUM EXTRAHIEREN VON HONIG AUS BIENENKORBRAHMEN
MACHINE FOR EXTRACTING HONEY FROM BEEHIVE FRAMES

(30) Priorité: 07.12.2001 FR 0116078; 07.12.2001 FR 0116079
(43) Date de publication de la demande: 29.09.2004
(73) Titulaire: SNT Thomas, 45450 Fay aux Loges (FR)
(72) Inventeur: BARRIER, Denis, F-45600 Villemurlin (FR)
(74) Mandataire: Thibon, Norbert
(86) Numéro de dépôt international: PCT/FR2002/004178
(87) Numéro de publication internationale: WO 2003/047337

(56) Documents cités:
- EP-A- 0 187 107
- US-A- 3 068 496
- US-A- 3 789 443
- US-A- 5 715 747

## Description

La présente invention concerne une machine à récupérer le miel contenu dans des alvéoles en cire disposées dans un cadre de ruche et fermées par un opercule en cire. Une telle machine comporte un désoperculateur, qui ouvre les opercules fermant les alvéoles pour en libérer le miel, voir p.e. le document US-A-3789 443.

Les abeilles fabriquent des alvéoles en ciré, c'est-à-dire des conduits parallèles et contigus disposés selon l'épaisseur du cadre, qu'elles remplissent de miel. Elles ferment ensuite les deux extrémités des alvéoles par des opercules, toujours en cire, qui maintiennent le miel dans les alvéoles. De manière courante, les ruches sont ainsi formées sur des cadres présentant une amorce de construction des alvéoles.

Pour récolter le miel, l'apiculteur doit enlever les opercules et extraire le miel des alvéoles. Il existe des machines qui permettent de réaliser ces opérations et qui comportent, à l'entrée, un désoperculateur dans lequel on introduit le cadre provenant de la ruche et qui enlève les opercules. Les cadres passent ensuite dans un extracteur à centrifugation dans lequel le miel est extrait des opercules. Les cadres sont alors replacés dans les ruches pour y être de nouveau remplis de miel.

Dans les machines connues, deux sortes de mélanges sont ainsi récupérés. L'un est appelé miel sale et comprend beaucoup de cire et peu de miel. L'autre est appelé miel propre et comprend peu de cire et beaucoup de miel. Le miel sale récupéré dans le désoperculateur est envoyé dans une centrifugeuse au moyen d'un convoyeur à vis. Le miel propre récupéré dans l'extracteur à centrifugation est également envoyé dans la centrifugeuse au moyen d'une pompe. L'utilisation d'une pompe, outre le fait qu'elle augmente le prix de revient de la machine, présente l'inconvénient de pouvoir créer une émulsion du miel qui est indésirable et difficile à éliminer ensuite.

Les désoperculateurs actuels mis en oeuvre dans de telles machines comportent deux dispositifs de grattage des opercules dans lesquels les cadres de ruche passant chacun successivement.

Ces désoperculateurs présentent un certain nombre d'inconvénients.

Les cadres passent dans un premier dispositif de grattage qui racle la cire des opercules de manière à ouvrir les alvéoles pour permettre l'extraction du miel. Certains alvéoles sont un peu plus courtes que l'épaisseur du cadre et au moins une de leurs extrémités est en retrait par rapport au cadre, si bien que le premier dispositif de grattage ne brise pas toujours leur opercule. C'est pourquoi un second dispositif de grattage est prévu. Il est disposé à la suite du premier dispositif de grattage et il pénètre dans l'épaisseur du cadre pour briser les opercules des alvéoles courtes. Un tel second dispositif de grattage, qui est généralement constitué par une lame continue, endommage les extrémités des alvéoles et les abeilles doivent alors, quand le cadre est replacé dans la ruche, reconstituer le bout des alvéoles avant d'aller butiner pour ramener du miel, ce qui nuit au rendement de la ruche.

Par ailleurs, les dispositifs de grattages sont chauffés au moyen d'une circulation de vapeur pour ramollir la cire. Ce mode de chauffage est difficile à contrôler et crée une humidité indésirable car le miel risque d'absorber de l'humidité et de dépasser le taux maximal autorisé d'hygrométrie.

Par ailleurs, certains cadres sont remplis de manière asymétrique et ils risquent de se placer en travers dans les deux dispositifs de grattage, ce qui risque d'endommager le cadre ou de le bloquer dans la machine.

De plus, dans de telles machines, les cadres circulent de bas en haut dans les dispositifs de grattage. Il en résulte que les alvéoles tout juste ouvertes, par exemple celles se trouvant en bas d'un cadre, sont rebouchées en partie par le miel et la cire coulant des alvéoles se trouvant au-dessus et qui sont grattées après elles par l'un des dispositifs de grattage.

Enfin, toujours lors de la découpe des opercules, un mélange de cire et de miel s'écoule le long des lames de découpe et tombe en gouttelettes sur le dispositif de grattage avant d'arriver dans une trémie de récupération disposée au-dessous. Le dispositif de grattage est ainsi encombré de rejets lors du fonctionnement des lames de découpe.

La présente invention apporte une solution à tous les inconvénients précités.

Dans la machine à récolter le miel conforme à l'invention et comme définie dans la revendication principale, le miel sale et le miel propre sont envoyés dans une trémie dont le fond est disposé au niveau de la partie supérieure de l'entrée d'un convoyeur à vis dont la sortie est raccordée à la centrifugeuse par l'intermédiaire d'une conduite qui est inclinée et qui fait monter le mélange de miel et de cire dans la centrifugeuse.

La trémie débouchant à la partie supérieure de l'entrée du convoyeur à vis constitue une chambre de pression qui crée un effet de pompe et permet la montée du mélange de miel et de cire sur une hauteur suffisante pour passer du bas de l'extracteur au haut de la centrifugeuse, par exemple sur une hauteur de 1,2 m. La suppression de la pompe élimine le risque de création d'une émulsion.

Avantageusement, le convoyeur à vis a une grande longueur. Cela permet d'augmenter la pression créée par le convoyeur à vis.

De préférence, la trémie est disposée sous le désoperculateur et le convoyeur à vis s'étend longitudinalement sous la machine. Cette disposition permet de simplifier la structure de la machine et de réduire son encombrement.

Selon une autre caractéristique de l'invention, la machine à récolter le miel comporte un dispositif de chargement des cadres dans l'extracteur comprenant un convoyeur à chaînes présentant un trajet allant du désoperculateur vers l'extracteur et un bras de poussée qui peut glisser sur une rampe de poussée parallèle au trajet de la chaîne et qui est monté à pivotement autour d'un axe horizontal transversal de manière à s'escamoter pour permettre la montée des cadres désoperculés.

De cette manière, les cadres sont suspendus sur les chaînes par leurs pattes ou clous de suspension et sont entraînés par les chaînes en s'accumulant les uns derrière les autres à l'extrémité du dispositif de chargement des cadres devant l'entrée de l'extracteur sans être gênés par le bras de poussée qui est alors escamoté. Lorsque le nombre des cadres désoperculés correspond à la capacité de chargement de l'extracteur, le bras de poussée est mis en position normale et vient se placer derrière le dernier cadre de chaque série de cadres à introduire dans l'extracteur. Le bras de poussée glisse alors sur la rampe de poussée et pousse la série de cadres désoperculés dans l'extracteur.

De préférence, le bras de poussée porte une patte transversale qui coopère avec une tige longitudinale de guidage qui est disposée parallèlement à la rampe de poussée de manière à escamoter le bras de poussée pendant la montée des cadres.

Selon encore une autre caractéristique de l'invention, l'extrémité aval de la tige longitudinale de guidage est montée à pivotement et repose sur la rampe de poussée. De cette manière, lorsque le bras de poussée a fini de pousser une série de cadres dans l'extracteur, la patte transversale qui s'est déplacée sous la tige longitudinale de guidage passe au-delà de l'extrémité de cette dernière en la soulevant au passage jusqu'à la dépasser et la laisser ainsi retomber, et lors du mouvement de retour du bras de poussée, la patte transversale monte sur la tige longitudinale de guidage et place le bras de poussée en position escamotée pour permettre le passage des cadres désoperculés suivants.

Selon un mode de réalisation de l'invention, le bras de poussée comprend deux barres longitudinales terminées par un élément de saisie des cadres et reliées par une barre transversale, la patte transversale étant fixée sur une des tiges longitudinales. Ce bras de poussée de structure simple permet de pousser les cadres en deux endroits en les maintenant bien en place perpendiculairement à la direction du déplacement.

Avantageusement, l'élément de saisie des cadres est constitué par une patte inférieure disposée sensiblement perpendiculairement sous chaque barre longitudinale à proximité de son extrémité aval de manière à venir en contact avec la barre supérieure d'un cadre. Cela constitue une prise efficace des cadres qui permet de les pousser, au-dessus de leurs points d'appui sur les chaînes et d'éviter de les faire osciller et perdre un peu de leur miel.

De préférence, le coulissement du bras de poussée est commandé par une manivelle.

Le désoperculateur comporte deux lames de découpe des opercules d'obturation des alvéoles, les deux lames étant parallèles entre elles, et deux dispositifs de grattage des alvéoles insuffisamment ou pas désoperculées par les lames de découpe. Selon l'invention, les dispositifs de grattage sont disposés en dessous et verticalement à la suite des lames de découpe pour que les cadres de ruche passent chacun successivement de haut en bas entre les lames de découpe et les dispositifs de grattage. Les dispositifs de grattage sont constitués chacun par une rampe de portions de disque qui est perpendiculaire à la direction de déplacement du cadre et pressée contre le cadre par des moyens élastiques, tels qu'un ressort.

Les portions de disque constituent chacune une lame qui peut pénétrer dans les alvéoles et ménager une fente dans l'opercule pour l'écoulement du miel. La forme arrondie des portions de disque associée à leur montage élastique permet de limiter au maximum l'endommagement des alvéoles.

De préférence, la distance entre deux portions de disque est inférieure au diamètre moyen des opercules et supérieure à la moitié de ce diamètre. Ceci permet d'assurer que chacun des alvéoles, qui sont naturellement disposées en quinconce, est " gratté " par au moins une lame arrondie.

La longueur de la rampe correspond à la largeur de l'espace intérieur du cadre pour que la rampe pénètre l'intérieur du cadre pour atteindre les alvéoles insuffisamment ou pas désoperculées.

Selon une autre caractéristique de l'invention, les portions de disque sont fixées sur un support de grattage qui est chauffé au moyen d'une résistance électrique et on prévoit une sonde thermostatique placée dans le support de grattage au voisinage de la résistance électrique et commandant une régulation de température. Ceci permet d'améliorer l'efficacité des dispositifs de grattage en utilisant un mode de chauffage qui ne crée pas de bruit et qui peut être facilement régulé.

Conformément à des caractéristiques secondaires de l'invention, les lames de découpe sont également fixées sur un support de découpe qui est chauffé au moyen d'au moins une résistance électrique et on prévoit une sonde thermostatique placée dans le support de découpe au voisinage de la résistance électrique et commandant une régulation de température. De plus, le chauffage des lames de découpe n'entraîne pas de bruit.

De préférence, les lames de découpe et leurs supports de découpe sont en forme de " V " inversé. Cette disposition permet d'augmenter l'efficacité des lames de découpe tout en limitant l'inertie thermique du support de découpe.

Le désoperculateur comporte un dispositif de remontée des cadres désoperculés les ramenant sensiblement au niveau d'introduction des cadres. Cela permet de diminuer la hauteur du désoperculateur et permet à l'apiculteur de travailler à hauteur d'homme dans de bonnes conditions.

Le dispositif de remontée des cadres peut avantageusement être constitué par des barres transversales dont les extrémités sont fixées chacune sur un maillon d'une chaîne d'entraînement, les deux chaînes d'entraînement étant disposées de part et d'autre des lames de découpe et des dispositifs de grattage, et deux rampes inclinées disposées en dessous des chaînes d'entraînement, la distance entre les deux rampes étant telle qu'elles supportent les pattes ou clous de suspension des cadres. De cette manière, pour la remontée des cadres, ces derniers sont suspendus sur les rampes inclinées et ils sont poussés par les barres transversales. Les barres transversales servent également à pousser l'extrémité supérieure des cadres lors de leur passage entre les lames de découpe et les dispositifs de grattage.

De préférence, la distance entre deux barres transversales sur les chaînes d'entraînement est sensiblement égale à trois fois la hauteur d'un cadre. Ceci permet d'éviter qu'un cadre ne soit introduit entre les lames de découpe avant que le cadre précédent n'ait quitté la zone se trouvant sous les dispositifs de grattage de manière à éviter que le mélange de cire et de miel ne tombe sur les cadres désoperculés.

Selon une autre caractéristique de l'invention, le désoperculateur comporte deux pièces de blocage de l'extrémité inférieure des cadres qui sont disposées juste avant les lames de découpe, qui sont montées à pivotement et qui sont maintenues en position de blocage par un dispositif de rappel, tel qu'un ressort. Ces dispositifs de blocage permettent de bien positionner le cadre avant son passage entre les lames de découpe et d'éviter que les cadres remplis de manière dissymétrique ne se mettent en travers. Ces dispositifs de blocage pivotent pour s'effacer et laisser passer le cadre sous l'effet de la poussée exercée par le dispositif d'entraînement du cadre constitué par la barre transversale du dispositif de remontée des cadres.

Selon encore une autre caractéristique de l'invention, on prévoit des déflecteurs disposés de part et d'autre des lames de découpe entre ces dernières et les dispositifs de grattage. Ces déflecteurs permettent d'éviter que des gouttelettes de mélange de cire et de miel ne tombent sur les dispositifs de grattage et dans la zone de départ du dispositif de remontée des cadres.

Par ses différentes caractéristiques, telles qu'elles ont été ci-avant ou qu'elles seront plus loin définies, décrites et illustrées, et telles qu'elles peuvent être avantageusement appliquées dans la pratique industrielle, l'invention vise à un meilleur rendement de la ruche.

En effet, les alvéoles étant peu abîmées par le désoperculateur, les cadres sont plus rapidement remplis par les abeilles qui n'ont plus à reconstituer les alvéoles.

De plus, grâce aux déflecteurs que le désoperculateur comporte selon un mode de réalisation avantageux de l'invention, la machine est peu arrêtée pour nettoyer le désoperculateur.

Par ailleurs, du fait que la machine selon l'invention ne comprend pas de pompe, il n'y a plus de risque qu'une émulsion du miel (indésirable et difficile à éliminer ensuite) se crée.

D'autres caractéristiques et avantages de l'invention ressortiront de la description qui suit, faite à titre illustratif et nullement limitatif, en se référant aux dessins ci-annexés sur lesquels :
- la figure 1 est une vue d'ensemble en perspective d'une machine à récolter le miel conforme à l'invention,
- la figure 2 est une vue en coupe du dispositif de chargement des cadres dans l'extracteur et ainsi que du désoperculateur disposé à la suite du dispositif de chargement des cadres,
- la figure 3 est une vue de dessus du bras de poussée et de son dispositif de guidage,
- la figure 4 est une vue en coupe longitudinale du convoyeur à vis avec sa trémie,
- la figure 5 est une vue de dessus du convoyeur à vis avec sa trémie,
- la figure 6 est une vue en coupe transversale du convoyeur à vis avec sa trémie,
- la figure 7 est une vue en perspective de la lame de découpe avec le support de découpe,
- la figure 8 est une vue en perspective du dispositif de grattage,
- la figure 9 est une vue en perspective de détail représentant un cadre dans le dispositif de remontée des cadres
- et la figure 5 est une vue de face du désoperculateur.

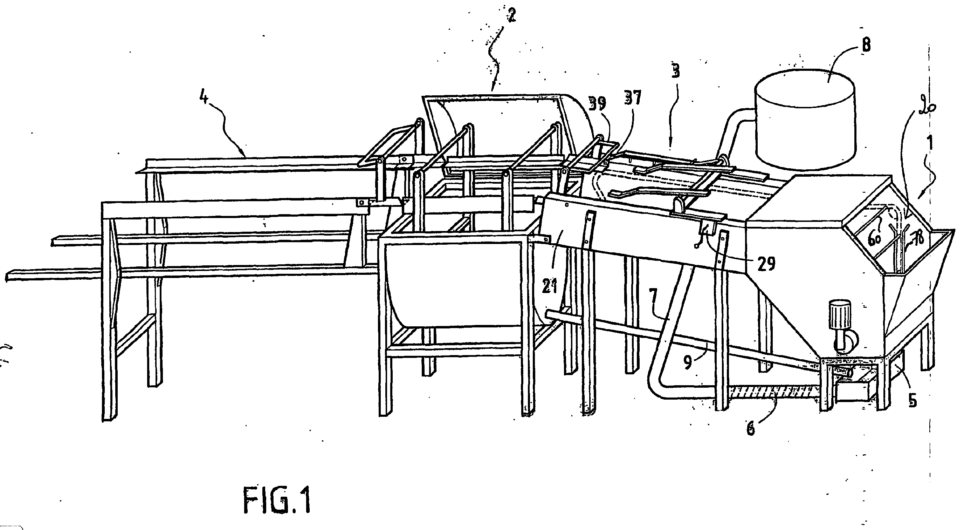

La figure 1 représente une machine à récolter le miel qui comporte notamment un désoperculateur 1 dans lequel on introduit directement par une ouverture 20 des cadres 30 provenant d'une hausse de ruche pour retirer les opercules fermant les alvéoles contenues dans les cadres. Selon l'mvention et comme il est également représenté en figure 1, la machine comporte un extracteur 2 dans lequel sont introduits les cadres désoperculés provenant du désoperculateur 1.

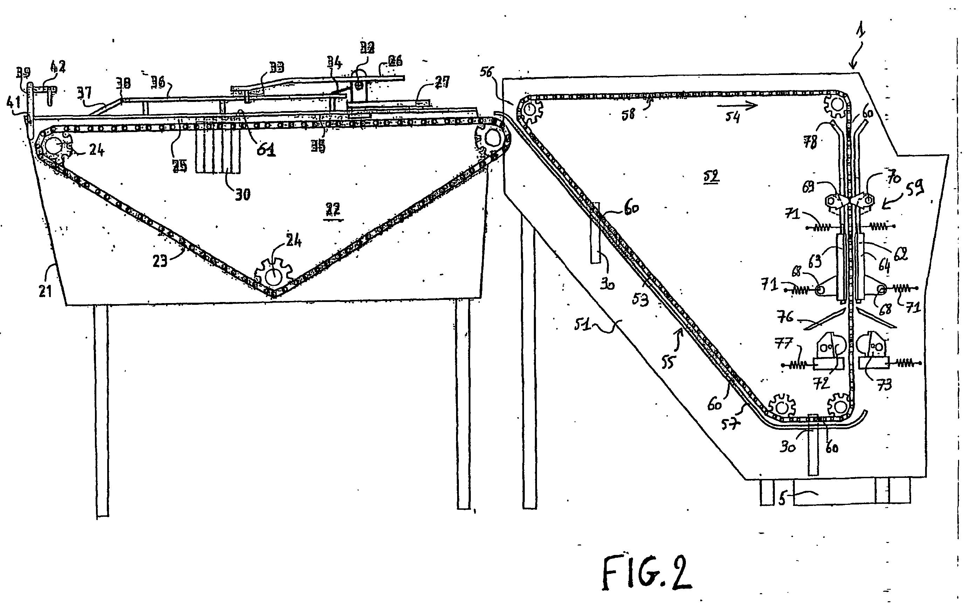

Le désoperculateur représenté sur la figure 2 comporte une cuve 51 de forme sensiblement trapézoïdale qui comprend, à sa partie inférieure, une trémie 5 de réception d'un mélange de beaucoup de cire et de peu de miel, appelé miel sale. A l'intérieur de chaque face latérale 52 est fixé un dispositif de remontée des cadres constitué par une chaîne 53 guidée par des roues dentées. Le parcours suivi par la chaîne 53, qui circule selon la flèche 54, comprend une partie inclinée 55 qui remonte de la trémie 5 à une zone de déchargement 56 où les cadres sont pris en charge par un dispositif de chargement 3 (ou convoyeur) des cadres dans l'extracteur 2. Le parcours que suit la chaîne 53 comporte également une partie supérieure horizontale 58 qui se termine au-dessus du dispositif de découpe et de grattage et une partie verticale 59 dans laquelle chaque chaîne 53 passe à l'extérieur du dispositif de découpe et de grattage, en regard de ce dernier. Les deux chaînes 53 sont disposées de part et d'autre du dispositif de découpe et de grattage.

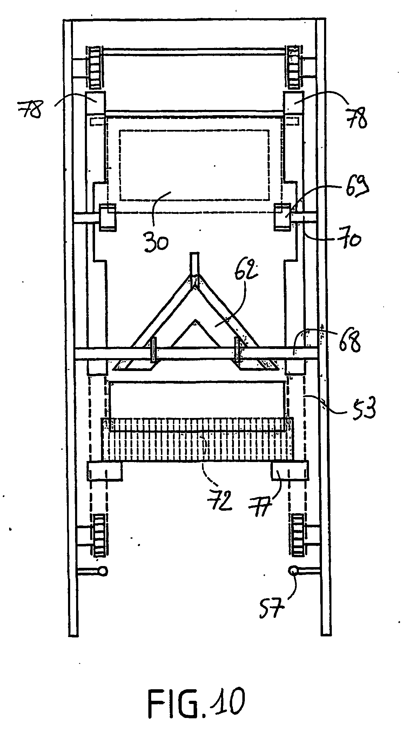

Le long de la partie inclinée 55 que suivent les chaînes 53, on prévoit une rampe 57 qui est disposée un peu dessous des chaînes 53. Chaque face latérale 52 comporte une rampe 57 et la distance les deux rampes est telle que les cadres peuvent être suspendus en y reposant par leurs pattes ou clous 61 (voir figure 9) qui servent à les suspendre dans les hausses de la ruche, c'est-à-dire les compartiments des ruches comprenant les cadres.

Des barres transversales 60 sont montées entre les chaînes, par exemple sur l'axe d'un maillon, et elles peuvent venir en contact avec la partie supérieure d'un cadre 30 de manière à la pousser sur la trajectoire des chaînes 53. Le diamètre des barres transversales 60 est inférieur à l'épaisseur d'un cadre 30 de manière à pouvoir passer librement sans contact entre les lames de découpe et les dispositifs de grattage du dispositif de découpe et de grattage. La distance entre deux barres transversales 60 successives sur la chaîne 53 est sensiblement égale au triple de la hauteur d'un cadre pour éviter, comme on le verra plus loin, qu'un cadre ne soit introduit dans le dispositif de découpe et de grattage avant que le cadre précédent n'ait quitté la zone se trouvant au-dessous du dispositif de découpe et de grattage.

Le dispositif de découpe et de grattage comporte deux lames de découpe 62 et 63 qui sont représentées sur les figures 2, 7 et 10. Ces lames de découpe 62 et 63 sont en forme de " V " inversé dont la pointe est dirigée vers le haut de manière à entamer la découpe par le milieu du cadre. Elles sont fixées sur un support de découpe 64 qui est également en forme de " V " inversé et dans lequel sont ménagés deux conduits 65 destinés à recevoir une résistance électrique de chauffage. Dans chacune des branches du " V " du support de découpe 64, on prévoit un logement supplémentaire 66 destiné à recevoir une sonde thermostatique utilisée pour la régulation de la température des lames de découpe 62 et 63.

Le support de découpe 64 comporte, à la pointe du V formé par la lame, un prolongement plat 67 qui est perpendiculaire au plan des lames de découpe 62 et 63. Le profil de son bord dirigé vers l'intérieur est arrondi de telle manière que l'espace existant entre les deux prolongements 67 diminue à partir de leur extrémité libre vers la lame 62, le bord intérieur du prolongement se terminant sensiblement au niveau du plan de coupe de la lame de découpe 62. On obtient ainsi un centrage progressif du cadre pour l'amener à affleurement avec la lame de découpe 62.

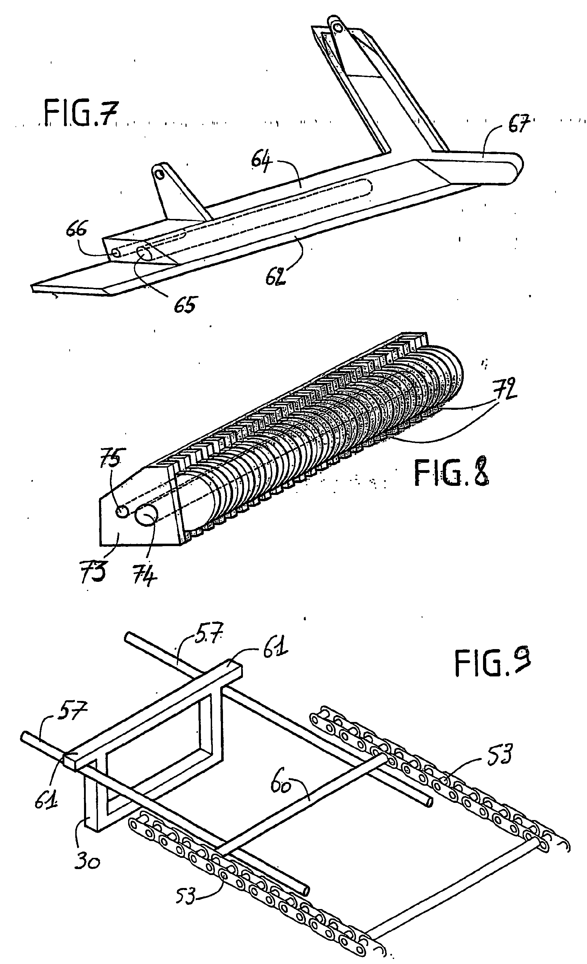

Chaque support de découpe 64 est soumis à une force horizontale tendant à pousser les lames de découpe l'une vers l'autre de manière à assurer un bon contact avec le cadre passant entre elles. Cela est réalisé, par exemple, au moyen d'une tige 68 qui est solidaire du support de découpe 64 et dont les deux extrémités sont soumises à l'action d'un ressort et d'un dispositif à ressort 71 tendant à pousser le prolongement 67 vers l'intérieur (figure 2). Comme on peut le voir sur la figure 7, les lames de découpe 62 et 63 et leur support de découpe 64 présentent, dans leur partie supérieure, sur leur face extérieure, une partie en biseau et les parties en biseau des lames et leur support sont alignées pour éviter toute accumulation du mélange de cire et de miel qui passe sur celles-ci.

Le dispositif de découpe et de grattage comprend également un dispositif de blocage constitué par deux pièces de blocage 69 (figure 10) de section sensiblement triangulaire qui sont disposées juste au-dessus des lames de découpe 62 et 63 et qui, en position de blocage, sont disposées face à face en obturant le passage du cadre dont la partie inférieure est bloquée par les deux pièces de blocage 69. Elles sont montées à pivotement vers le bas autour d'un axe 70 et sont maintenues en position de blocage au moyen d'un dispositif de rappel, tel qu'un ressort.

En dessous des lames de découpe 62 et 63 se trouve un dispositif de grattage qui est représenté sur la figure 8. Il est essentiellement constitué de lames de forme arrondie 72 qui sont disposées parallèlement les unes aux autres dans la direction perpendiculaire au trajet du cadre. Ces lames 72 qui sont réalisées sous la forme de demi-disques et ont un écartement mutuel qui est inférieur au diamètre moyen d'une alvéole mais supérieur à la moitié de celui-ci, par exemple à 4 mm. Les demi-disques constitués par les lames 72 sont fixés sur un support de grattage 73 horizontal qui comporte un logement traversant 74 pour une résistance électrique de chauffage et un logement traversant 75 pour une sonde thermostatique de régulation. Un dispositif de rappel élastique 77 tel qu'un ressort (voir la figure 2) maintient les deux supports de grattage en contact avec le cadre lors du passage de ce dernier.

Comme on peut le voir sur la figure 2, deux déflecteurs 76 sont disposés de part et d'autre du trajet du cadre, entre les lames de découpe 62 et 63 et le dispositif de grattage, pour éviter la projection de mélange de cire et de miel sur les demi-disques 72 et les cadres lorsque ces derniers se trouvent en dessous des lames de découpe 62 et 63 dans la zone de prise en charge par le dispositif de remontée des cadres.

On voit sur les figures 1, 2 et 10 deux dispositifs de guidage 78, réalisés avantageusement en matière synthétique, présentant préférentiellement une forme évasée qui forment une sorte d'entonnoir et qui sont disposés sur les faces latérales 52 de la cuve 51 de manière à guider les bords latéraux du cadre lors de son introduction et de son passage dans le désoperculateur. Ces dispositifs de guidage 78 comportent un évidement pour le passage des pièces de blocage 69.

De préférence, les lames de découpe et les demi-disques de grattage sont en acier inoxydable et leurs supports sont en aluminium.

Le fonctionnement du désoperculateur qui vient d'être décrit est le suivant. L'apiculteur place le cadre provenant d'une hausse de la ruche entre les deux pièces de guidage 78. Le cadre vient en contact avec les deux barres de blocage 69 et se trouve donc bien positionné avant son introduction dans le dispositif de découpe et de grattage. Les chaînes 53 tournent en permanence et une barre transversale 60 vient en contact avec le dessus du cadre et le pousse de manière régulière et dans la bonne position entre les lames de découpe 62 et 63 en écartant les deux barres de blocage 69. Le cadre est alors centré par les prolongements 67 et écarte les lames de découpe tout en passant entre elles, entraînant la découpe de tous les opercules dépassant latéralement du cadre. Le cadre passe ensuite entre les lames parallèles de forme arrondie 72 qui sont écartées par le bas du cadre puis se rapprochent au niveau de l'intérieur du cadre pour venir gratter chaque alvéole. Le cadre tombe ensuite sur les rampes inclinées 57 sur lesquelles il est repris et poussé par la barre transversale 60 jusqu'à ce qu'il arrive dans la zone de transfert 56 où il est pris en charge par le convoyeur 3.

Le profil de la rampe inclinée 57 est déterminé pour que le cadre ne sorte d'en dessous les déflecteurs 76 qu'après que tout le mélange de cire et de miel provenant de la découpe de ses opercules soit tombé dans la trémie 5, tout en avançant très légèrement pour permettre à la barre de poussée de venir derrière le cadre.

Comme il ressort des figures 1 et 2, les cadres désoperculés sont transférés du désoperculateur 1 à l'extracteur 2 au moyen du dispositif de chargement 3 des cadres qui place une série de cadres dans un panier de l'extracteur 2 où ils sont soumis à une centrifugation pour extraire le miel des alvéoles. Après l'extraction du miel, les cadres sont placés dans un réceptacle 4 en attendant d'être remis dans les hausses.

Le miel sale récupéré au fond du désoperculateur 1 est envoyé dans une trémie 5 qui est disposée sous le désoperculateur 1 et raccordée à l'entrée d'un convoyeur à vis 6 dont la sortie est raccordée à une conduite inclinée 7 qui est elle-même raccordée à une centrifugeuse 8 (figure 1). Le miel propre récupéré au fond de l'extracteur 2 est également envoyé dans la trémie 5 au moyen d'un conduit 9 si bien que c'est le mélange du miel sale et du miel propre, qui constitue un mélange de miel et de cire, qui est envoyé à l'entrée du convoyeur à vis 6 et parvient dans la centrifugeuse 8 qui est disposée au voisinage de la machine et dans laquelle on sépare le miel et la cire par centrifugation (figure 1). Le convoyeur à vis 6 et le conduit 9 sont disposés selon la direction longitudinale de la machine.

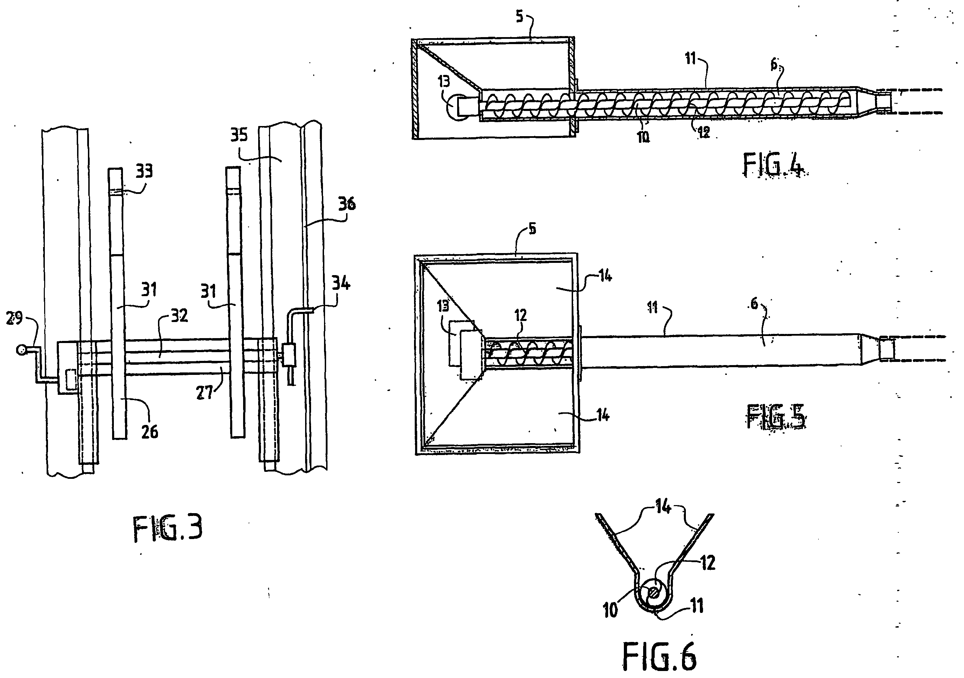

Le convoyeur à vis 6 et la trémie 5 sont représentés en détail sur les figures 4 à 6. Le convoyeur à vis 6 comporte un tube horizontal 11, de préférence en acier inoxydable, dans lequel est logée une vis hélicoïdale 12, également en acier inoxydable, qui est entraînée en rotation par un moteur électrique 13 comportant un motoréducteur. Comme on peut le voir sur la figure 6, qui est une vue partielle en coupe du fond de la trémie 5 et de l'entrée du convoyeur à vis 6, les parois 14 du fond de la trémie 5 sont raccordées à la partie supérieure du tube 11 du convoyeur à vis 6 de telle sorte que les mélanges de miel et de cire ne pénètrent pas dans le fond de la trémie 5, mais directement dans le tube 19. De ce fait, le convoyeur à vis 6 emmène la plus grande quantité possible de mélange de miel et de cire, en créant une chambre de pression à l'entrée du convoyeur à vis 6, ce qui permet de faire monter le mélange de miel et de cire sur une hauteur relativement importante, par exemple sur 1,2 m. la longueur totale du convoyeur à vis est élevée, ce qui permet d'augmenter l'effet de pression créé.

On peut donc envoyer le miel propre dans la centrifugeuse 8 sans utiliser de pompe, ce qui élimine le risque de formation d'une émulsion. De plus, la centrifugeuse 8 peut être disposée à hauteur d'homme, ce qui facilite l'utilisation de la machine. Il a été constaté que, même quand on n'envoie que du miel propre dans la trémie 5, il monte dans la centrifugeuse 8.

Selon un exemple de réalisation, le diamètre intérieur du tube 11 est d'environ 100 mm, la vitesse de rotation de la vis hélicoïdale 12 est de 75 t/mn, le diamètre de l'axe 10 de la vis hélicoïdale 12 est d'environ 40 mm, la longueur totale du convoyeur à vis 6 est d'environ 900 mm. La conduite inclinée 7 a un diamètre d'environ 50 mm.

Comme on peut le voir sur la figure 2, le dispositif de chargement 3 des cadres est disposé dans une cuve 21 qui est ouverte à sa partie supérieure et comporte deux parois latérales parallèles 22. Sur la face interne de chaque paroi latérale 22 est montée une chaîne 23 qui est guidée par des roues dentées 24 de manière à présenter un trajet 25 au voisinage du bord supérieur de la paroi latérale 22. L'écartement entre les deux chaînes 23, qui constituent un convoyeur à chaînes, est légèrement inférieur à la largeur d'un cadre de telle manière que les cadres peuvent reposer sur les deux chaînes par leurs pattes ou clous 61 servant à les suspendre dans les hausses. Les cadres désoperculés qui sortent du désoperculateur 1 qui sont, par exemple, entraînés par un convoyeur comportant deux rampes de suspension des cadres et un élément de poussée, tombent sur les deux chaînes 23 et sont entraînés par ces dernières vers l'extracteur 2 jusqu'à ce qu'ils viennent en butée sur un dispositif de blocage disposé au voisinage de l'extracteur 2 ou sur un cadre précédent déjà bloqué. Les chaînes 23 glissent alors sous les cadres bloqués à la sortie du dispositif de chargement 3 des cadres.

Pour charger une série de cadres désoperculés dans l'extracteur 2, on prévoit un bras de poussée 26 qui est monté à coulissement le long du trajet 25 de la chaîne 23. Ce bras de poussée 26 est monté à pivotement autour d'un axe transversal sur un support 27 qui peut se déplacer sur deux rampes de poussée 35 disposées au voisinage du bord supérieur de l'une des parois latérales 22 parallèlement au trajet 25. Ce déplacement est commandé manuellement par une manivelle 29.

Comme on peut le voir sur la figure 3, le bras de poussée 26 est constitué de deux barres longitudinales 31 disposées à l'intérieur de la cuve 21 qui sont reliées entre elles par une barre transversale 32 qui est montée à articulation sur le support 27 et qui constitue donc l'axe d'articulation du bras de poussée 26 sur le support 27.

Les extrémités des barres longitudinales 31 comportent chacune une patte inférieure 33 disposée sensiblement à angle droit par rapport à la barre longitudinale 31 au voisinage de l'extrémité de cette dernière de manière à constituer un élément de saisie de la barre supérieure des cadres.

Une des barres longitudinales 31 porte une patte transversale 34 dirigée vers l'extérieur et en avant de l'axe d'articulation de la barre transversale 32. Cette patte transversale 34 peut coulisser sur une tige longitudinale de guidage 36 qui est disposée au-dessus de la rampe de guidage 35 (ou rampe de poussée) parallèlement à cette dernière. L'extrémité aval 37 de la tige de guidage 36 est disposée au voisinage de l'extracteur 2 et elle est montée à pivotement autour d'un axe transversal 38 de manière à venir en appui sur la rampe de guidage 35. L'axe de pivotement de la barre transversale 32 du bras de poussée 26 est positionné de telle manière que le centre de gravité du bras de poussée 26 se situe en avant de l'axe de la barre transversale 32 par rapport au sens de déplacement des cadres. Par conséquent, le bras de poussée 26 peut se déplacer dans une position basse de poussée des cadres, dans laquelle la patte transversale 34 passe sous la tige de guidage 36, et dans une position haute représentée sur la figure 2 et dans laquelle la patte transversale 34 glisse sur la tige de guidage 36.

A l'extrémité aval de la cuve 21, on prévoit une glissière de transfert 39 constituée par deux barres sur lesquelles glissent les pattes ou clous de suspension 61 des cadres. Cette glissière de transfert 39 est montée à pivotement autour d'un axe transversal 41 et comporte une barre 42 formant poignée. En position baissée (voir figure 1), la glissière de transfert 39 constitue un " pont " permettant le passage d'une série de cadres désoperculés de la cuve 21 dans un panier de l'extracteur 2 qui est ouvert. En position relevée, la glissière de transfert 39 est verticale et on peut refermer l'extracteur 2. Par ailleurs, dans cette dernière position, la glissière 39 vient se placer verticalement au bord de la cuve 21 de manière à bloquer le premier cadre amené par la chaîne 23. Une glissière de transfert analogue est prévue pour le passage des cadres vides sortant de l'extracteur 2 vers le réceptacle d'attente 4.

Le chargement d'une série de cadres dans l'extracteur 2 est réalisé de la manière suivante.

Le bras de poussée 26 se trouve dans la position escamotée de repos représentée sur la figure 2, la patte transversale 34 reposant sur la tige de guidage 36, et la glissière de transfert 39 est en position relevée. Le premier cadre sortant du désoperculateur 1 tombe sur la chaîne 23 et il est entraîné sur le trajet 25 jusqu'à ce qu'il arrive en butée sur la glissière de transfert 39. Les autres cadres viennent se placer les uns contre les autres et ils sont maintenus en place par la rotation de la chaîne 23, qui glisse en dessous.

Lorsque le nombre de cadres au moins égal à la capacité de l'extracteur 2 est atteint, on actionne la manivelle 29 (figure 1) pour déplacer le bras de poussée 26 en arrière jusqu'à ce que la patte transversale 34 passe sous la tige de guidage 36 et que le bras de poussée 26 tombe en position normale de poussée. La position de la patte transversale 34 et la longueur de la tige de guidage 36 sont déterminées pour que l'élément de saisie 33 du bras de poussée 26 se trouve alors juste au-dessus du premier cadre suivant le dernier cadre de la série à charger. On tire alors ledit premier cadre en arrière pour que l'élément de saisie 33 se place sur le dernier cadre de la série à charger. On fait basculer la glissière de transfert 39 en position horizontale de transfert et on actionne la manivelle 29 pour faire avancer le bras de poussée 26, la patte transversale 34 se déplaçant sous la tige de guidage 36.

La série de cadres est ainsi poussée de la cuve 21 dans le panier de l'extracteur 2 et, en fin de parcours, la patte transversale 34 passe sous l'extrémité articulée 37 de la tige de guidage 36 en la soulevant. Ensuite, on actionne la manivelle 29 pour ramener le bras de poussée 26 en arrière dans la position de départ. Au cours de ce mouvement, la patte transversale 34 glisse sur l'extrémité 37 de la tige de guidage 36 et monte sur cette dernière en mettant le bras de poussée 26 en position escamotée.

On procède de même pour introduire une autre série de cadres dans l'extracteur 2, après avoir fait permuter les paniers de ce dernier. On remet la glissière de transfert 39 en position de blocage en la dégageant de l'extracteur 2, qui peut être refermé pour une opération d'extraction. Après extraction du miel, les cadres vides sont poussés dans le réceptacle 4 en glissant sur la glissière de transfert suivante.

La description qui précède explique clairement comment l'invention permet d'atteindre les objectifs qu'elle s'est fixés. En particulier, on voit que l'invention permet de supprimer la pompe servant à envoyer le miel propre dans la centrifugeuse 8, ce qui élimine le risque de formation d'une émulsion. De plus, l'invention permet de simplifier la structure de la machine et de réduire son prix de revient.

Il ressort également clairement de la description que le chargement des cadres dans l'extracteur 2 est réalisé de manière très aisée et très fiable. Un seul opérateur peut donc facilement effectuer les différentes opérations de la récolte du miel.

Egalement, l'invention permet de réaliser un désoperculateur qui fonctionne avec un silence absolu de fonctionnement avec une grande fiabilité en ce qui concerne positionnement des cadres.

L'utilisation des demi-disques 72 permet d'ouvrir toutes les alvéoles en réduisant au maximum les dégâts sur les alvéoles puisqu'il suffit de réaliser une fente et que les demi-disques 72 sont montés élastiquement et peuvent contourner les parois du cadre.

Le dispositif de remontée des cadres dans le désoperculateur permet d'introduire les cadres et de les ramener à hauteur d'homme, ce qui permet à l'apiculteur de travailler rapidement et sans peine.

Les déflecteurs du désoperculateur permettent d'éviter que les cadres désoperculés ne soient souillés par le mélange de cire et de miel fourni par la désoperculation, ce qui facilite leur fonctionnement et évite des pertes de miel puisque le mélange reçu dans la trémie 5 est ensuite soumis à une opération de filtrage pour récupérer le miel. Par ailleurs, la distance entre deux barres transversales successives est suffisamment grande pour éviter qu'un cadre ne soit poussé entre les lames de découpe avant que le cadre précédent n'ait quitté la zone de prise en charge par la rampe de guidage 57.

Le dispositif de chauffage par résistance électrique permet de chauffer de manière efficace au plus près des lames ou des dispositifs de grattage.

Le désoperculateur selon l'invention est facilement adaptable à tous les types de cadres. Il suffit, par exemple, pour passer des cadres à pattes de suspension aux cadres à clous de suspension, d'introduire un guide métallique dans les dispositifs de guidage 78 pour éviter que les clous ne viennent s'accrocher dans les chaînes 53. On peut aussi, du fait du montage élastique des lames et des demi-disques, s'adapter à des cadres de différentes épaisseurs.

On peut prévoir de motoriser le déplacement du bras de poussée avec un fonctionnement automatique déclenché par un détecteur du nombre de cadres accumulés dans la cuve.

## Revendications

1. Machine de récupération du miel comportant un désoperculateur (1) qui ouvre les opercules fermant les alvéoles d'un cadre de ruche et dans lequel on récupère un mélange, appelé miel sale, contenant une grande quantité de cire et peu de miel, et un extracteur (2) qui extrait le miel des alvéoles d'une série de cadres après passage dans ledit désoperculateur et dans lequel on récupère un mélange, appelé miel propre, contenant une grande quantité de miel et peu de cire, le miel sale et le miel propre étant envoyés dans une centrifugeuse (8) séparant le miel de la cire par l'intermédiaire d'une trémie (5) dont le fond (14) est disposé au niveau de la partie supérieure de l'entrée d'un convoyeur à vis (6) dont la sortie est raccordée à la centrifugeuse (8) par l'intermédiaire d'une conduite (7) qui est inclinée et qui fait monter le mélange de miel et de cire dans la centrifugeuse (8).

2. Machine à récupérer le miel selon la revendication 1, **caractérisée en ce qu'**elle comporte un dispositif (3) de chargement des cadres dans l'extracteur (2), comprenant un convoyeur à chaînes (23) présentant un trajet (25) allant du désoperculateur (1) vers l'extracteur (2) et un bras de poussée (26) qui peut glisser sur une rampe de poussée (35) parallèle au trajet (25) des chaînes (23) et qui est monté à pivotement autour d'un axe horizontal transversal de manière à s'escamoter pour permettre la montée des cadres (30) désoperculés.

3. Machine à récupérer le miel selon la revendication 2, **caractérisée en ce que** le bras de poussée (26) porte une patte transversale (34) qui coopère avec une tige longitudinale de guidage (36) disposée parallèlement à la rampe de poussée (35) de manière à escamoter le bras de poussée (26) pendant la montée des cadres (30).

4. Machine à récupérer le miel selon la revendication 3, **caractérisée en ce que** l'extrémité aval (37) de la tige longitudinale de guidage (36) est montée à pivotement et **en ce qu'**elle repose sur la rampe de poussée (35).

5. Machine à récupérer le miel selon l'une quelconque des revendications 2 à 4, **caractérisée en ce que** le bras de poussée (26) comprend deux barres longitudinales (31) terminées par un élément de saisie (33) des cadres et reliées par une barre transversale (32), la patte transversale (34) étant fixée sur une des tiges longitudinales (31).

6. Machine à récupérer le miel selon la revendication 5, **caractérisée en ce que** l'élément de saisie des cadres est constitué par une patte inférieure (33) disposée sensiblement perpendiculairement sous chaque barre longitudinale (31) à proximité de son extrémité aval de manière à s'engager sur le bord supérieur d'un cadre (30).

7. Machine à récupérer le miel suivant l'une quelconque des revendications 1 à 6, **caractérisée en ce que** le désoperculateur comporte deux lames (62, 63) de découpe des opercules d'obturation des alvéoles, les deux dites lames étant parallèles entre elles, et deux dispositifs de grattage (72-75) desdites alvéoles insuffisamment ou pas désoperculées par lesdites lames de découpe (62, 63), lesdits dispositifs de grattage étant disposés en-dessous et verticalement à la suite des lames de découpe (62, 63) pour que les cadres de ruche passent chacun successivement, de haut en bas, entre lesdites lames de découpe (62, 63) et entre lesdits dispositifs de grattage (72-75), les dispositifs de grattage étant constitués par une rampe de portions de disque (72) qui est perpendiculaire à la direction de déplacement du cadre et pressée contre le cadre par des moyens élastiques, tels qu'un ressort.

8. Machine selon la revendication 7, **caractérisée en ce que** les lames de découpe (62, 63) du désoperculateur sont fixées sur un support de découpe (64) qui est chauffé au moyen d'au moins une résistance électrique.

9. Machine selon la revendication 8, **caractérisée en ce que** le désoperculateur comporte une sonde thermostatique qui est placée dans le support de découpe (64) au voisinage de la résistance électrique et qui commande une régulation de température.

10. Machine selon l'une quelconque des revendications 7 à 9, **caractérisé en ce que** le désoperculateur comporte un dispositif (53, 57, 60) de remontée des cadres (30) désoperculés sensiblement au niveau d'introduction des cadres.

11. Machine selon la revendication 10, **caractérisée en ce que** ledit dispositif de remontée des cadres est constitué par des barres transversales (60) dont les extrémités sont fixées chacune sur un maillon d'une chaîne d'entraînement (53), les deux chaînes d'entraînement étant disposées de part et d'autre des lames de découpe (62, 63) et des dispositifs de grattage (72-75), et par deux rampes inclinées (57) disposées en dessous des chaînes d'entraînement (53), la distance entre les deux dites rampes (57) étant telle qu'elles supportent les pattes ou clous de suspension des cadres (30).

12. Machine selon la revendication 11, **caractérisée, en ce que** la distance entre deux barres transversales (60) sur les chaînes d'entraînement (53) est sensiblement égale à trois fois la hauteur d'un cadre (30) pour éviter que le mélange de cire et de miel ne tombe sur lesdits cadres (30) désoperculés.

13. Machine selon l'une quelconque des revendications 7 à 12, **caractérisée en ce que** le désoperculateur comporte deux pièces de blocage (69) de l'extrémité inférieure des cadres (30) qui sont disposées juste avant les lames de découpe (62, 63), et qui sont montées à pivotement et maintenues en position de blocage par un dispositif de rappel, tel qu'un ressort.

14. Machine selon l'une quelconque des revendications 7 à 13, **caractérisée en ce que** le désoperculateur comporte des déflecteurs (76) qui sont disposés de part et d'autre des lames de découpe (62, 63), entre ces dernières et les dispositifs de grattage pour éviter que des gouttelettes de mélange de cire et de miel ne tombent sur les dispositifs de grattage et dans la zone de départ du dispositif de remontée desdits cadres (30).

## Claims

1. Machine for recovering honey having a decapper (1) which opens the caps closing the cells of a beehive frame and in which is recovered a mixture, called dirty honey, containing a large amount of wax and little honey, and an extractor (2) which extracts the honey from the cells of a series of frames after passage through the said decapper and in which is recovered a mixture, called clean honey, containing a large amount of honey and little wax, the dirty honey and the clean honey being sent to a centrifuge (8) separating the honey from the wax via a hopper (5), the bottom (14) of which is arranged at the level of the upper part of the inlet of a screw conveyor (6), the outlet of which is connected to the centrifuge (8) via a duct (7) which is inclined and which takes the mixture of honey and wax up into the centrifuge (8).

2. Machine for recovering honey according to Claim 1, **characterised in that** it has a device (3) for loading the frames into the extractor (2), comprising a chain conveyor (23) having a path (25) leading from the decapper (1) to the extractor (2) and a pushing arm (26) which can slide on a pushing ramp (35) parallel to the path (25) of the chains (23) and which is mounted so as to pivot about a transverse horizontal axis so as to retract in order to permit the ascent of the decapped frames (30).

3. Machine for recovering honey according to Claim 2, **characterised in that** the pushing arm (26) bears a transverse lug (34) which cooperates with a longitudinal guide rod (36) arranged parallel to the pushing ramp (35) so as to retract the pushing arm (26) during the ascent of the frames (30).

4. Machine for recovering honey according to Claim 3, **characterised in that** the downstream end (37) of the longitudinal guide rod (36) is mounted so as to pivot and **in that** it rests on the pushing ramp (35).

5. Machine for recovering honey according to any one of Claims 2 to 4, **characterised in that** the pushing arm (26) comprises two longitudinal bars (31) terminated by a frame-grasping element (33) and connected by a transverse bar (32), the transverse lug (34) being fixed on one of the longitudinal bars (31).

6. Machine for recovering honey according to Claim 5, **characterised in that** the frame-grasping element is formed by a lower lug (33) arranged substantially perpendicularly under each longitudinal bar (31) close to its downstream end so as to engage on the upper border of a frame (30).

7. Machine for recovering honey according to any one of Claims 1 to 6, **characterised in that** the decapper has two blades (62, 63) for cutting off the caps obturating the cells, the two said blades being parallel to one another, and two devices (72-75) for scraping the said cells insufficiently or not decapped by the said cutting blades (62, 63), the said scraping devices being arranged below and vertically following the cutting blades (62, 63), so that the beehive frames each pass successively, from top to bottom, between the said cutting blades (62, 63) and between the said scraping devices (72-75), the scraping devices being formed by a bank of disc portions (72) which is perpendicular to the direction of displacement of the frame and pressed against the frame by elastic means, such as a spring.

8. Machine according to Claim 7, **characterised in that** the cutting blades (62, 63) of the decapper are fixed on a cutting support (64) which is heated by means of at least one electrical resistance.

9. Machine according to Claim 8, **characterised in that** the decapper has a thermostatic probe which is placed in the cutting support (64) in the vicinity of the electrical resistance and which controls a temperature regulation.

10. Machine according to any one of Claims 7 to 9, **characterised in that** the decapper has a device (53, 57, 60) for lifting the decapped frames (30) substantially to the level of introduction of the frames.

11. Machine according to Claim 10, **characterised in that** the said device for lifting the frames is formed by transverse bars (60), the ends of which are each fixed on a link of a drive chain (53), the two drive chains being arranged on both sides of the cutting blades (62, 63) and of the scraping devices (72-75), and by two inclined ramps (57) arranged below the drive chains (53), the distance between the two said ramps (57) being such that they support the lugs or nails for suspension of the frames (30).

12. Machine according to Claim 11, **characterised in that** the distance between two transverse bars (60) on the drive chains (53) is substantially equal to three times the height of a frame (30), in order to prevent the mixture of wax and honey from falling on the said decapped frames (30).

13. Machine according to any one of Claims 7 to 12, **characterised in that** the decapper has two parts (69) for blocking the lower end of the frames (30), which parts are arranged just before the cutting blades (62, 63) and are mounted so as to pivot and held in the blocking position by a return device, such as a spring.

14. Machine according to any one of Claims 7 to 13, **characterised in that** the decapper has deflectors (76) which are arranged on both sides of the cutting blades (62, 63), between these latter and the scraping devices, in order to prevent droplets of the mixture of wax and honey from falling onto the scraping devices and into the departure area of the device for lifting the said frames (30).

## Patentansprüche

1. Maschine zur Gewinnung von Honig, umfassend einen Entdeckler (1), der die Deckel öffnet, welche die Zellen eines Wabenrahmens verschließen, und in dem ein "unreiner Honig" genanntes Gemisch gesammelt wird, das eine große Menge Wachs und wenig Honig enthält, und einen Extraktor (2), der den Honig aus den Zellen einer Reihe von Rahmen nach Durchlauf in den Entdeckler entnimmt, und in dem ein "reiner Honig" genanntes Gemisch gesammelt wird, das eine große Menge Honig und wenig Wachs enthält, wobei der "unreine Honig" und der "reine Honig" in eine Zentrifuge (8) befördert werden, die den Honig vom Wachs mittels eines Trichters (5) trennt, dessen tiefster Teil (14) auf gleicher Höhe mit dem obersten Teil des Eingangs eines Schneckenförderers (6) angeordnet ist, dessen Ausgang mit der Zentrifuge (8) mittels einer Leitung (7) verbunden ist, die geneigt ist und das Gemisch aus Honig und Wachs in die Zentrifuge (8) hinaufbefördert.

2. Maschine zur Honiggewinnung nach Anspruch 1, **dadurch gekennzeichnet, dass** sie eine Vorrichtung (3) zum Laden der Rahmen in den Extraktor (2) umfasst, die einen Kettenförderer (23) mit einem Weg (25) enthält, der vom Entdeckler (1) zum Extraktor (2) verläuft, und einen Schubarm (26), der auf einer Schubrampe (35) parallel zum Weg (25) der Ketten (23) gleiten kann und der derart schwenkbar um eine horizontale Querachse montiert ist, dass er eingezogen werden kann, um die Aufwärtsbewegung der entdeckelten Rahmen (30) zu ermöglichen.

3. Maschine zur Honiggewinnung nach Anspruch 2, **dadurch gekennzeichnet, dass** der Schubarm (26) eine Querstütze (34) trägt, die derart mit einer parallel zu der Schubrampe (35) angeordneten längs gerichteten Führungsstange (36) zusammenwirkt, dass der Schubarm (26) während der Aufwärtsbewegung der Rahmen (30) eingezogen wird.

4. Maschine zur Honiggewinnung nach Anspruch 3, **dadurch gekennzeichnet, dass** das stromabwärts gelegene Ende (37) der längs gerichteten Führungsstange (36) schwenkbar montiert ist und dass es auf der Schubrampe (35) aufliegt.

5. Maschine zur Honiggewinnung nach einem der Ansprüche 2 bis 4, **dadurch gekennzeichnet, dass** der Schubarm (26) zwei mit einem Element zur Aufnahme (33) der Rahmen endende und mit einer Querstange (32) verbundene Längsstangen (31) umfasst, wobei die Querstütze (34) auf einer der Längsstangen (31) fixiert ist.

6. Maschine zur Honiggewinnung nach Anspruch 5, **dadurch gekennzeichnet, dass** das Element zur Aufnahme der Rahmen derart aus einer im Wesentlichen senkrecht unter jeder Längsstange (31) in der Nähe ihres stromabwärts gelegenen Endes angeordneten unteren Stütze (33) gebildet ist, dass es über die Oberkante eines Rahmens (30) greift.

7. Maschine zur Honiggewinnung nach einem der Ansprüche 1 bis 6, **dadurch gekennzeichnet, dass** der Entdeckler zwei Klingen (62, 63) zum Abschneiden der Verschlussdeckel der Zellen umfasst, wobei die beiden Klingen parallel zueinander angeordnet sind, und zwei Vorrichtungen zum Aufkratzen (72-75) der unzureichend oder gar nicht durch die Klingen zum Abschneiden (62, 63) entdeckelten Zellen umfasst, wobei die Vorrichtungen zum Aufkratzen unter und senkrecht hinter den Klingen zum Abschneiden (62, 63) angeordnet sind, damit die Wabenrahmen jeweils nacheinander, von oben nach unten, zwischen den Klingen zum Abschneiden (62, 63) und zwischen den Vorrichtungen zum Aufkratzen (72-75) hindurchgehen, wobei die Vorrichtungen zum Aufkratzen aus einer Rampe aus Scheibenteilen (72) bestehen, die senkrecht zur Bewegungsrichtung des Rahmens verläuft und durch elastische Mittel wie z. B. eine Feder gegen den Rahmen gedrückt wird.

8. Maschine nach Anspruch 7, **dadurch gekennzeichnet, dass** die zum Entdeckler gehörenden Klingen zum Abschneiden (62, 63) auf einem Schneidenträger (64) fixiert sind, der mittels wenigstens eines elektrischen Widerstands erhitzt wird.

9. Maschine nach Anspruch 8, **dadurch gekennzeichnet, dass** der Entdeckler einen Wärmewächter umfasst, der in dem Schneidenträger (64) in der Nähe des elektrischen Widerstandes angeordnet ist und der eine Wärmeregelung steuert.

10. Maschine nach einem der Ansprüche 7 bis 9, **dadurch gekennzeichnet, dass** der Entdeckler eine Vorrichtung (53, 57, 60) zum Anheben der entdeckelten Rahmen (30) umfasst, die im Wesentlichen auf der Einführungshöhe der Rahmen liegt.

11. Maschine nach Anspruch 10, **dadurch gekennzeichnet, dass** die Vorrichtung zum Anheben der Rahmen aus Querstangen (60) gebildet ist, deren Enden jeweils an einem Glied einer Antriebskette (53) befestigt sind, wobei die beiden Antriebsketten auf beiden Seiten der Klingen zum Abschneiden (62, 63) und der Vorrichtungen zum Aufkratzen (72-75) angeordnet sind, und aus zwei unter den Antriebsketten (53) angeordneten geneigten Rampen (57), wobei der Abstand zwischen den beiden Rampen (57) derart ist, dass sie die Halter oder Nägel zum Tragen der Rahmen (30) stützen.

12. Maschine nach Anspruch 11, **dadurch gekennzeichnet, dass** der Abstand zwischen zwei Querstangen (60) auf den Antriebsketten (53) in etwa der dreifachen Höhe eines Rahmens (30) entspricht, um zu verhindern, dass das Gemisch aus Wachs und Honig auf die entdeckelten Rahmen (30) tropft.

13. Maschine nach einem der Ansprüche 7 bis 12, **dadurch gekennzeichnet, dass** der Entdeckler zwei Teile zum Arretieren (69) des unteren Endes der Rahmen (30) umfasst, die genau vor den Klingen zum Abschneiden (62, 63) angeordnet sind und die schwenkbar montiert sind und durch eine Rückstellvorrichtung wie z. B. eine Feder in Arretierstellung gehalten werden.

14. Maschine nach einem der Ansprüche 7 bis 13, **dadurch gekennzeichnet, dass** der Entdeckler Abweiser (76) umfasst, die auf beiden Seiten der Klingen zum Abschneiden (62, 63) zwischen letzteren und den Vorrichtungen zum Aufkratzen angeordnet sind, um zu verhindern, dass Tröpfchen des Gemisches aus Wachs und Honig auf die Vorrichtungen zum Aufkratzen und in den Anfangsbereich der Vorrichtung zum Anheben der Rahmen (30) tropfen.
